# EUROPEAN PATENT APPLICATION

(11) **EP 2 056 004 A1**
(43) Date of publication of application: **06.05.2009**
(21) Application number: 07119529.1
(22) Date of filing: 29.10.2007
(51) Int. Cl.: F16J 15/34

(54) **Mechanical seals and methods of making**

(71) Applicant: GENERAL ELECTRIC COMPANY, Schenectady, NY 12345 (US)
(72) Inventor: Anand, Krishnamurthy, 460005 Bangalore (IN); Salehi, Mohsen, Watervliet, NY 12189 (US); Brisson, Bruce William, Galway, NY 12074 (US); Ghasripoor, Farshad, Scotia, NY 12302 (US); Mathew, Paul, 560037 Bangalore (IN); Gray, Dennis Michael, Delanson, NY 12053 (US); Srinivasan, Dheepa, 560005 Bangalore (IN)
(74) Representative: Szary, Anne Catherine

(57) **Abstract**

A mechanical seal includes a pair of opposing seal faces (10), wherein at least one of the pair of seal faces (10) includes a multilayer coating (14) disposed on a substrate (12), wherein the multilayer coating (14) has a periodic repetition of distinct layers, a plurality of layers of a composite wherein no two adjacent layers of the composite comprise an identical ratio of composite constituents, or both. A method of making the seal includes disposing a multilayer coating (14) on a substrate (12) to form at least one of a pair of opposing seal faces (10) of a mechanical seal.

## Description

The present disclosure relates to seals, and more particularly to mechanical seals for use in rotating machinery.

Mechanical seals are used in a variety of rotary shaft devices including blowers, compressors, vacuum pumps, expanders, hot gas path assemblies, and the like. These seals minimize or prevent fluid (either gas or liquid) from escaping from a working chamber containing the rotating shaft by providing a barrier e.g., between the working chamber and an external environment or between the two consecutive stages of a compressor or turbine.

One such type of mechanical face seal is a spiral groove seal, in which spiral-shaped groove areas are provided on one of a pair of opposing seal faces. Upon rotation of one of the seal faces relative to the other, due to hydrodynamic action, fluid is forced through the grooves toward a non-grooved portion of the seal face. At a certain speed, depending on the design of the seal, the fluid pressure, owing to this pumping action, will separate the seal faces by a precise amount. The non-grooved portion of the seal face serves as a seal dam that provides resistance to fluid escape and also maintains uniform fluid pressure. One of the pair of opposing seal faces may be spring loaded to provide additional resistance to fluid escape by ensuring that a force is applied to oppose separation of the two seal faces and to minimize the gap between the seal faces.

When the rotation speed is too low (e.g., during start up and shut down of the device in which the spiral groove seal is installed), there is not enough pressure generated to separate the sealing faces. As a result, contact between the seal faces occurs which, even though brief, may be sufficient to generate microcracks, grain pull out, and/or grain disintegration at the seal faces owing to frictional heat and wear. The concentration of these defects can increase from repeated contact events and/or from the hoop and centrifugal stresses that are generated during normal operating conditions (i.e., rotation speeds), leading to failure of the seal and ultimately failure of the seal housing and/or device employing the seal.

Previous efforts to increase the lifetime of a seal have focused on increasing hardness, increasing crack resistance, decreasing friction, minimizing the number of contact events, and the like. Many seal faces are now formed from high performance carbides (e.g., tungsten carbide, silicon carbide, and the like, in their various forms) instead of oxides or metals. However, many of these seals are limited in thickness and, therefore, cannot sustain the wear conditions to which they are exposed during their operational lifetime. Accordingly, despite the improvements that have been made, there nonetheless remains a need in the art for improved mechanical seals.

### BRIEF SUMMARY

A mechanical seal includes a pair of opposing seal faces, wherein at least one of the pair of seal faces comprises a multilayer coating disposed on a substrate, and wherein the multilayer coating comprises a periodic repetition of distinct layers.

In another embodiment, the mechanical seal includes a pair of opposing seal faces, wherein at least one of the pair of seal faces comprises a multilayer coating disposed on a substrate, wherein the multilayer coating comprises a plurality of layers of a composite, and wherein no two adjacent layers of the composite comprise an identical ratio of composite constituents.

A method includes disposing a multilayer coating on a substrate to form at least one of a pair of opposing seal faces of a noncontacting mechanical seal.

The above described and other features are exemplified by the following figures and detailed description.

### BRIEF DESCRIPTION OF THE DRAWINGS

Referring now to the figures, which are exemplary embodiments and wherein like elements are numbered alike:
Figure 1 is a longitudinal cross-sectional representation of a portion of a noncontacting mechanical seal face; and
Figure 2 is a schematic illustration of a noncontacting mechanical seal face having spiral shaped grooves.

### DETAILED DESCRIPTION

Mechanical seals and their methods of manufacture are disclosed herein. In exemplary embodiments, the mechanical seals are noncontacting mechanical seals. The term "noncontacting" when used herein to describe a seal has its art recognized meaning (i.e., that there is a pressure-generated separation between opposing seal faces at some point during the operation of the device employing the seal). The rotational speed at which the separation between opposing seal faces occurs is also a function of the surface finish of the seal faces. Over time, upon degradation of a seal surface, higher rotational speeds are needed for separation, resulting in increased generation of heat and wear on the surfaces of the seal faces while they are in contact. In contrast to the prior art, the seals and methods disclosed herein are generally based on at least one of the seal faces comprising a multilayer coating. The use of the multilayer coating advantageously results in a hard wear resistant seal face having reduced friction and reduced wear related microcrack formation. These features ultimately result in increased seal and device lifetimes.

Also, the terms "first", "second", and the like do not denote any order, quantity, or importance, but rather are used to distinguish one element from another; and the terms "the", "a", and "an" do not denote a limitation of quantity, but rather denote the presence of at least one of the referenced items. The modifier "about" used in connection with a quantity is inclusive of the stated value and has the meaning dictated by the context, (e.g., includes the degree of error associated with measurement of the particular quantity). Furthermore, all ranges reciting the same quantity or physical property are inclusive of the recited endpoints and independently combinable.

The seal generally includes a pair of opposing seal faces, wherein at least one seal face comprises a multilayer coating disposed on a substrate. During operation of the seal, one of the seal faces rotates with respect to the other. While either (or both) seal face may comprise the multilayer coating, it is desirable that at least the rotating seal face comprises the multilayer coating. Furthermore, either (or both) seal face may optionally comprise spiral-shaped grooves; however, it is desirable that at least the rotating seal face has these grooves.

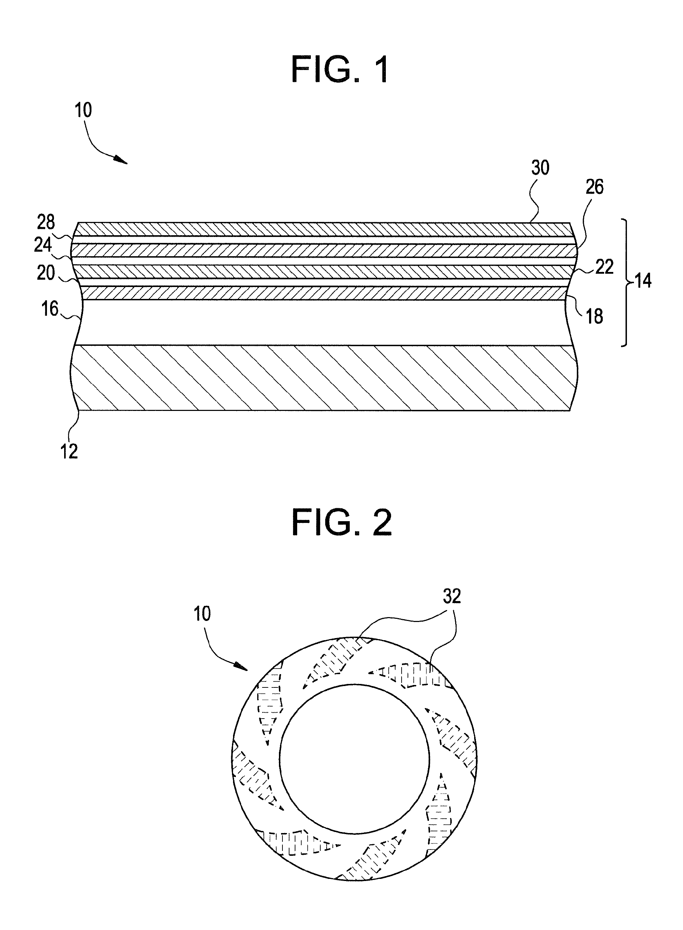

Referring now to Figure 1, a portion of a seal face, designated 10, is illustrated. The portion of the seal face 10 generally includes the substrate 12 and the multilayer coating 14 disposed thereon.

The substrate 12 onto which the multilayer coating 14 is disposed may be any metal, metallic alloy, or ceramic (e.g., oxide, nitride, carbide, and the like) composition. In an exemplary embodiment, the substrate 12 is a carbide composition. Exemplary carbides include silicon carbide (e.g., solid silicon carbide, siliconized graphite, reaction bonded silicon carbide, self-sintered silicon carbide, or a composite comprising at least one of the foregoing) and tungsten carbide (e.g., tungsten carbide or a metal-bonded tungsten carbide). It is important to note that the composition and the microstructure of the substrate can affect the performance of the seal face.

Within the multilayer coating 14, the composition of each layer may be chosen to provide a desired property such as hardness, wear resistance, lubricity, thermal stress resistance, fracture toughness, adherence, or a combination comprising at least one of the foregoing properties.

By way of example, when hardness, wear resistance, and/or thermal stress resistance are desired, a ceramic material may be used as a composition for a layer of the multilayer coating 14. Suitable ceramic compositions include hard phase metal oxides such as Al₂O₃, Cr₂O₃, ZrO₂, and the like; metal carbides such as Cr₃C₂, WC, TiC, ZrC, B₄C, and the like; diamond, diamond-like carbon; metal nitrides such as cubic BN, TiN, ZrN, HfN, Si₃N₄, AlN, TiAIN, TiAlCrN, TiCrN, TiZrN, and the like; metal borides such as TiB₂, ZrB₂, Cr₃B₂, W₂B₂, and the like; and combinations comprising at least one of the foregoing compositions. Alternatively, a composition for a layer of the multilayer coating 14 is a ceramic composite comprising at least 51 volume percent (vol %), based on the total volume of the composite, of the aforedescribed suitable ceramic compositions and a binder phase of a relatively soft and low melting composition. Suitable ceramic binder phase compositions for the ceramic composite include SiO₂, CeO₂, Y₂O₃, TiO₂, and combinations comprising at least one of the foregoing ceramic binder phase compositions. In yet another alternative, a composition for a layer of the multilayer coating 14 is a ceramic-metal composite (cermet). Suitable cermets include WC/Co, WC/CoCr, WC/Ni, TiC/Ni, TiC/Fe, Ni(Cr)/Cr₃C₂, and combinations comprising at least one of the foregoing. Still other compositions for a layer of the multilayer coating 14 include combinations comprising at least one of the ceramic, ceramic composites, or cermets (e.g., a metal or alloy matrix comprising one of the foregoing).

In another example, when lubricity is desired, a composition for a layer of the multilayer coating 14 may comprise germanium, MoS₂, a polyamide, a fluoropolymer (e.g., polytetrafluoroethylene, fluorinated ethylenepolypropylene, or the like), graphite, a transition metal boride, hexagonal boron nitride, and like solid lubricants. Advantageously, these solid lubricants, when in the form of a powder, in addition to providing lubricity, will also facilitate the removal of heat from the contact area of the seal.

In another example, where adherence is desired, a composition for a layer of the multilayer coating 14 may comprise a MCrAl or MCrAlY alloy, wherein M represents a metal such as iron, nickel, or cobalt; NiAl(Zr) compositions; and the like.

While there is no specific upper limit to the number of individual layers that may form the multilayer coating 14, there must be at least two 2 layers. Within the multilayer coating 14, the thermal expansion of the individual layers with the substrate and between the individual layers should be considered. Additionally, the layers should be able to tolerate any non-uniform strain.

Furthermore, within the multilayer coating 14, each layer may have a different thickness and/or each layer may have a non-uniform thickness. The average thickness of each layer may independently be about 5 nanometers (nm) to about 25 micrometers (µm). Within this range, the average thickness of each layer can independently be greater than or equal to about 10 nm, specifically greater than or equal to about 20 nm. Also within this range, the average thickness of each layer can independently be less than or equal to 10 µm, specifically less than or equal to about 5 µm. The average thickness of the overall multilayer coating 14 may be about 2 µm to about 500 µm. Within this range, the average thickness of the overall multilayer coating 14 can be greater than or equal to about 5 µm, specifically greater than or equal to about 8 µm. Also within this range, the average thickness of the thickness of the overall multilayer coating 14 can be less than or equal to 200 µm, specifically less than or equal to about 50 µm.

In one embodiment, at least a portion of the multilayer coating 14 can be a periodic repetition of individual layers. For example, two different compositions can be alternatingly stacked to form 3 or more layers. In addition, 3 different compositions may be stacked in any number of permutations including, but not limited to, 1-2-3-1-2-3-, 1-2-3-2-1-, and the like. If these alternatingly stacked layers are sufficiently thin (e.g., less than or equal to about 100 nm), a heterostructure or superlattice is formed, which can have a significantly improved hardness and fracture resistance than a thicker, individual layer.

In another embodiment, the multilayer coating 14 can comprise more than one individual layer of a composite such that each layer has the same constituent components but in different amounts or ratios. For example, a composite comprising nanoparticles dispersed in a matrix can be used for each layer of the multilayer coating 14 with increasing (or decreasing) amounts of the nanoparticles in the next adjacent layer such that a gradient in properties exists. As used herein, in reference to layers of the multilayer coating, the term "adjacent" refers to two layers that are in physical contact (i.e., there is no intervening layer disposed between two layers referred to as being adjacent to one another).

Each layer of the multilayer coating 14 can independently be deposited or otherwise formed on the substrate 12 by any of a variety of suitable techniques, such as physical vapor deposition (PVD), including electron beam physical vapor deposition (EB-PVD), radio frequency sputtering, ion beam sputtering, plasma assisted physical vapor deposition, cathodic arc deposition, and cathodic arc ion plasma deposition; chemical vapor deposition (CVD); and the like. Each of these techniques can be used to form the individual layers of the multilayer coating 14 by those skilled in the art in view of this disclosure without undue experimentation. Depending on the technique used, the atomic structure of each layer can independently be tailored to be crystalline or amorphous as may be desired for a particular seal application. Furthermore, if crystalline, the grain morphology can also be tailored as desired for the particular seal application.

Referring again to Figure 1, an exemplary rotating seal face 10 of a mechanical seal can be formed on a Ni-bonded WC cermet substrate 12. The average longest dimension of a grain of WC is greater than or equal to about 3 µm. Specifically, the grain size distribution is bimodal, wherein about 60 % of the grains have an average longest dimension greater than about 3 µm and the balance of the grains are have an average longest dimension less than about 2 µm. The amount of nickel present in the cermet is about 6 to about 15 weight percent (wt %) based on the total weight of the cermet. Within this range, it is desirable to have greater than or equal to about 9 wt % nickel present in the cermet. In this manner, any cracks that are generated in the WC are prevented from growing by the presence of an increased amount of nickel.

The multilayer coating 14 is formed by depositing alternating layers of TiN (18, 22, and 26) and ZrN (20 and 24). It should be recognized that while reference has been made to 5 alternating layers (i.e., 18, 20, 22, 24, and 26), this is only for illustrative purposes. One of ordinary skill in the art will appreciate that any number of alternating layers may be used. Furthermore, although the first alternating layer 18 (i.e., the layer closest to the substrate) in this embodiment has been referred to as a TiN layer, it is possible for ZrN to be used as the first alternating layer 18.

Alternating layers 18, 20, 22, 24, and 26 are deposited by a PVD technique, and can be directly deposited onto the substrate 12 or onto an optional adhering layer 16, which may better adhere to the substrate 12 than the first alternating layer 18. The optional adhering layer 16 can be deposited using CVD so as to provide better control over the grain growth on the substrate. It is desirable for the optional adhering layer 16 to have the same composition as the first alternating layer 18 to provide the greatest compatibility therebetween. The alternating layers 18, 20, 22, 24, and 26 generally each have a thickness of about 20 nm to about 100 nm so as to form a heterostructure. In one embodiment, the cumulative thickness of all of the alternating layers 18, 20, 22, 24, and 26 is about 3 µm to about 8 µm. The optional adhering layer 16 can have a thickness of about 1 µm to about 25 µm.

Optionally, a low friction layer 28 may be disposed on the last (i.e., outermost from the substrate 12) alternating layer 26. The optional low friction layer 28 can be, for example, a diamond-like carbon layer. Any of the above-described techniques may be used to deposit the optional low friction layer 28.

Alternatively, or in addition to the optional low friction layer 28, an optional solid lubricant layer 30 may be disposed on the last alternating layer 26 (or the optional low friction layer 28) to provide increasing lubricity to the rotating seal face 10 when it contacts the opposing seal face (not shown). The optional solid lubricant layer 30 may be burnished or deposited on the last alternating layer 26 (or the optional low friction layer 28) using a binder phase.

Once the uppermost layer of the multilayer coating 14 has been deposited onto the substrate 12, spiral-shaped grooves 32, as shown in Figure 2, may be etched or machined into the surface of the uppermost layer. It is also possible for the substrate 12 to be machined or etched prior to deposition of the multilayer coating 14, while maintaining the spiral-shaped grooves 32 after deposition. Exemplary techniques for depositing the multilayer coating 14 on an already machined or etched substrate 12 include EB-PVD, cathodic arc deposition, and the like.

In another exemplary embodiment, instead of alternating layers of TiN (18, 22, and 26) and ZrN (20 and 24), a plurality of layers of a composite comprising Al₂O₃ nanoparticles dispersed in a nanostructured NiCrAl or CoCrAl alloy matrix are used such that each layer in the plurality of layers has a different concentration (e.g., volume fraction) of Al₂O₃ nanoparticles than any immediately adjacent layer. For example, one layer may be ceramic-rich, while the next adjacent layer may be alloy rich. Within the composite, the Al₂O₃ nanoparticles have an average longest dimension of about 10 nm to about 200 nm. Also within the cumulative composite, the overall Al₂O₃ volume fraction is high (e.g., about 70 to about 80 %) so as to provide increased hardness to the composite.

The plurality of composite layers (18, 20, 22, 24, and 26) are deposited by a PVD technique and, similarly, can be directly deposited onto the substrate 12 or onto the optional adhering layer 16, which may better adhere to the substrate 12 than the first composite layer 18. The overall thickness of the plurality of composite layers (18, 20, 22, 24, and 26) is about 50 µm to about 300 µm.

In yet another exemplary embodiment, the multilayer coating 14 comprises a combination of the plurality of composite layers and the heterostructure to provide still increased hardness. Desirably, the plurality of composite layers is deposited on the substrate prior to the layers comprising the heterostructure such that the heterostructure is disposed on the plurality of composite layers on a surface opposite the substrate.

It should be recognized by those skilled in the art that the mechanical seals and methods disclosed herein provide hard wear resistant seal faces having reduced friction and reduced wear related microcrack formation. For example, the Vickers hardness (Hᵥ) of a seal face comprising the multilayered coating may be about 4000 to about 5000. As a result, the lifetimes of the mechanical seal and the device employing the seal may be significantly improved.

It should also be recognized that the mechanical seal and the device employing the seal may include other components that are known to be used with mechanical seals and devices employing mechanical seals, such as springs (for spring-loading at least one of the pair of spring faces, which is generally the static face), shafts, rotors, stators, secondary o-ring seals, and the like.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A mechanical seal, comprising:
a pair of opposing seal faces (10), wherein at least one of the pair of seal faces (10) comprises a multilayer coating (14) disposed on a substrate (12), wherein the multilayer coating (14) comprises a periodic repetition of distinct layers, a plurality of layers of a composite wherein no two adjacent layers of the composite comprise an identical ratio of composite constituents, or both.

2. The mechanical seal of claim 1, wherein the distinct layers form a heterostructure.

3. The mechanical seal of claim 1 or claim 2, wherein the multilayer coating (14) further comprises an adhering layer (16), a low friction layer (28), a lubricant layer (30), or combinations thereof.

4. The mechanical seal of any preceding claim, wherein the mechanical seal is a noncontacting mechanical seal.

5. The mechanical seal of any preceding claim, wherein the at least one of the pair of seal faces (10) comprising the multilayer coating (14) disposed on the substrate (12) rotates during operation of the noncontacting mechanical seal.

6. The mechanical seal of any preceding claim, wherein the at least one of the pair of seal faces (10) comprising the multilayer coating (14) disposed on the substrate (12) comprises spiral-shaped grooves (32).

7. A method, comprising:
disposing a multilayer coating (14) on a substrate (12) to form at least one of a pair of opposing seal faces (10) of a mechanical seal.

8. The method of claim 7, wherein the multilayer coating (14) comprises a periodic repetition of distinct layers, a plurality of layers of a composite wherein no two adjacent layers of the composite comprise an identical ratio of composite constituents, or both.

9. The method of claim 7 or claim 8, wherein any of the layers of the multilayer coating (14) are disposed using physical vapor deposition.

10. The method of any one of claims 7 to 9, further comprising chemical vapor depositing an adhering layer (16) on the substrate (12) prior to disposing the multilayer coating (14) on the substrate (12).
